# EUROPÄISCHE PATENTSCHRIFT

(11) **EP 0 435 829 B1**
(45) Veröffentlichungstag und Bekanntmachung des Hinweises auf die Patenterteilung: **15.11.1995**
(21) Anmeldenummer: 90811021.6
(22) Anmeldetag: 21.12.1990
(51) Int. Cl.: G01N 21/17, G01N 25/00

(54) **Anordnung zur Thermowellenanalyse von Schichtsystemen**
Arrangement for the analysis of thermal waves in layered systems
Arrangement pour l'analyse d'ondes thermiques dans des systèmes en couches

(30) Priorität: 28.12.1989 DD 336625
(43) Veröffentlichungstag der Anmeldung: 03.07.1991
(73) Patentinhaber: JENOPTIK GmbH, D-07743 Jena (DE)
(72) Erfinder: Geiler, Hans-Dieter, O-6900 Jena (DE); Wagner, Matthias, O-6908 Jena (DE); Stock, Detlef, O-6908 Jena (DE); Kowalski, Peter, O-6902 Jena (DE)
(74) Vertreter: Oehmke, Volker

(56) Entgegenhaltungen:
- US-A- 4 271 355
- US-A- 4 869 574
- APPLIED OPTICS, Bd. 22, Nr. 20, 15. Oktober 1983, New York, US, Seiten 3169-3176; J. OPSAL et al.: 'Thermal wave detection and thin-film thickness measurements with laser beam deflection'
- APPLIED PHYSICS B, PHOTOPHYSICS AND CHEMISTRY, Bd. B47, Nr. 1, September 1988, Heidelberg, DE, Seitne 35-40; A. LÖRINCZ: "Single-beam thermal-wave microscope based on Fourier imaging of phase information"
- ANALYTICAL CHEMISTRY, Bd. 60, Nr. 9, 1. Mai 1988, Columbus, US, Seiten 838-842; J.F. POWERS et al.: 'Mode-mismatched laser-induced thermal lens effect detection via spatial Fourier analysis of beam profiles'
- PATENT ABSTRACTS OF JAPAN vol. 11, no. 304 (E-545)(2751) 2. Oktober 1987 ; & JP-A-62 097 245

## Beschreibung

Die Erfindung betrifft eine Anordung zur Thermowellenanalyse von Schichtsystemen gemäss dem Oberbegriff des Patentanspruches 1 (siehe z. B. US-A-4579463). Sie wird verwendet zur Messung geometrischer, thermischer, elektronischer und elastomechanischer Materialparameter von Schichten durch Auswertunng der photothermischen Response-Signale aus dem Schichtsystem. Die berührungslos und zerstörungsfrei arbeitende Anordnung hat ihr Hauptanwendungsgebiet in der Beschichtungstechnologie.

Gegenwärtig nimmt mit steigender Integrationsdichte in der Mikroelektronik das Interesse zu, effektive, berührungslose und zerstörungsfreie Meßtechnik zur Bestimmung oberflächennaher Eigenschaften eines Schichtsystems im Herstellungsprozeß ohne vorhergehende aufwendige Präparationen einzusetzen. Das gilt insbesondere für die Bestimmung von Schichtdicken, Dotierungsinhomogenitäten, Dotierungsprofilen sowie für die Entdeckung von durch technologische Schritte hervorgerufenen Defekten, dünner Resistrückstände usw.
Die bekannten Verfahren der Anregung von hochfrequenten Thermo-und Plasmawellen in Wafern und die Detektion der Wechselwirkung mit den oberflächennahen Schichten durch Messung der periodischen Änderung des Reflexionskoeffizienten und/oder der elastischen Deformation der Oberfläche in Verbindung mit geeigneten Modellen zur Interpretation der Meßergebnisse sind am besten geeignet, die obengenannten Erfordernisse bei hoher Reproduzierbarkeit der Meßergebnisse zu erfüllen.
A. ROSENCWAIG beschreibt in "Photoacoustics and thermal wave phenomena in semiconductors" (A. Mandelis [Hrsg.], Verlag North-Holland New York - Amsterdam - London, New York 1987, S.101-105) die Theorie der laserinduzierten modulierten Reflexion. Die Änderung des Reflexionskoeffizienten wird hier als durch Thermowellen und durch Plasmawellen unter Berücksichtigung ungleichförmiger räumlicher Verteilung und des Vorhandenseins von Einfangquerschnitten für Ladungsträger hervorgerufene Wechselwirkungen mit dem zu untersuchenden Körper interpretiert. Eine angepaßte Lösung der Wärme- und der Ladungsträgerdiffusionsgleichungen führt dann zusammen mit der dargestellten phänomenologischen Beschreibung zu Modellen, die praktische Messungen ermöglichen. Der damit gegenwärtig erreichte Stand wird in den nachfolgenden Patentschriften sichtbar.
In der US-PS 45 79 463 sind eine Methode und ein experimenteller Aufbau der Prinziplösung der laserinduzierten modulierten Reflexion beschrieben. Ein mittels eines akusto-optischen Modulators intensitätsmodulierter Laserstrahl passiert einen Dichroitspiegel, der für diese Laserwellenlänge transparent ist, und wird mit Hilfe eines Mikroobjektivs auf das zu untersuchende Objekt fokussiert. Die (automatische) Fokussierung und die translatorische Bewegung des Objektes gewährleistet ein Mikroskoptisch. Ein Ausleselaserstrahl mit einer vom modulierten Laserstrahl verschiedenen Wellenlänge, für die der Dichroitspiegel undurchlässig ist, wird über Polarisationsprisma, Viertelwellenlängenplättchen und Dichroitspiegel vorzugsweise koinzident mit dem Anregungslaser ebenfalls auf das Objekt fokussiert, wobei der Spot des Ausleselasers nicht größer als der des Anregungslasers sein darf. Das durch die Reaktion auf die Anregung des Objektes ebenfalls modulierte Licht des Ausleselasers gelangt nach Durchlauf des gleichen optischen Weges auf einen Detektor, der die Intensität des gesamten Laserbündels integral erfaßt. Die über eine schmalbandige Signalverarbeitung (z. B. Lock-in-Technik) mit hinreichen- dem Signal-Rausch-Abstand erfaßten Meßwerte (Amplitude und/oder Phase) werden durch Vergleich mit Referenzwerten in einem Auswerterechner bewertet und damit Rückschlüsse auf Materialparameter gezogen. Voraussetzungen für die Bestimmung eines Materialparameters ist jedoch immer die Kenntnis und Konstanz aller anderen im Modell enthaltenen, da nur ein unabhängiges Meßergebnis in Form des Integrales über die im Bildfokus vorhandene Intensität oder der Mittelwert der Phase zur Verfügung stehen.
Die US-PS 46 36 088 und US-PS 46 79 946 beschreiben Verfahren und Vorrichtungen, die die Bestimmung von zwei Parametern des Objektes gleichzeitig gestatten, indem einmal die Modulation des Reflexionskoeffizienten (gemäß US-PS 45 79 463) und danach oder gleichzeitig die elastische Deformation (entsprechend US- PS 45 22 510) gemessen werden. Dabei werden Anregungs- und Ausleselaser einmal koinzident und einmal parallel versetzt auf den Meßpunkt gerichtet. Ein an einen Bizelldetektor angeschlossener Auswerterechner erfaßt die Summe (Reflexionssignal) und Differenz (Maß für elastische Deformation). Die Werte gestatten in Verbindung mit dem Modell für laserinduzierte modulierte Reflexion und dem OPSAL-ROSENCWAIG-Modell für elastische Deformation ("Thermal-wave detection and thin film thickness measurements with laser beam deflection", in: Appl. Opt. 22/1983/S. 3169-3176) z. B. die Dicke einer SiO₂-Schicht und ihrer Dotierung durch Lösung eines Gleichungssystems zu ermitteln. Ein weiteres Verfahren vom Typ der "laser beam deflection" ist in Anal. Chem. 60 (9)/1988/S. 838-842 von J.F. POWERS et al. "Mode - mismatched laser-induced thermal lens effect detection via spatial Fourier analysis of beam profiles" beschrieben worden. Hier werden erstmalig Strahlprofile aufgenommen und in der Frequenzdomäne untersucht. Diese Verfahren haben den Nachteil, daß sie keine Anwendung bei komplizierteren Mehrschichtstrukturen finden können, wenn die Eigenschaften der Einzelschichten nicht bekannt sind. In Appl. Phys. B 47 (1)/1985/S. 35-40 offenbart A. LÖRINCZ in seinem Aufsatz "Single-beam thermal-wave microscopes based on Fourier imaging of phase information" ein Einstrahlverfahren, indem der reflektierte Anregungsstrahl interferometrisch optisch sehr aufwendig ausgewertet wird.
In der US-PS 45 13 384 ist offenbart, wie durch Variation der Modulationsfrequenz des Anregungslasers z. B. n-Schicht-Systeme oder Tiefenprofile der Dotierung vermessen werden können. Je nach der Anzahl n der Schichten sind Meßwerte bei mindestens n+1 Frequenzen aufzunehmen. Das Modell eines eindimensionalen Mehrschichtsystems, beschrieben in A. ROSENCWAIG: Photoacoustics and photoacoustic spectroscopy, Wiley Interscience, Vol. 750, New York, 1980, S. 270-284) in Verbindung mit einem piezoelektrischen Detektor wird zur Berechnung der Schichtdicken hinzugezogen. Dadurch ist diese Methode jedoch nicht mehr berührungslos und setzt außerdem auch die Kenntnis der thermischen Konstanten aller Schichten voraus.

Ziel der Erfindung ist es, eine Möglichkeit zur berührungslosen und zerstörungsfreien Bestimmung von Eigenschaften eines Schichtkörpers auf der Basis von Thermowellenmessungen zu finden, die die gleichzeitige Ermittlung von mehreren, voneinander unabhängigen Eigenschaften gestattet.

Der Erfindung liegt die Aufgabe zugrunde, eine neuartige Möglichkeit der Thermowellenmessung zu realisieren, die die integrale Erfassung des Thermowellenresponse-Signales vermeidet.
Erfindungsgemäß wird die Aufgabe bei einer Anordnung zur Thermowellenanalyse von Schichtsystemen mit einem Anregungslaser, wobei dieser einen zylindersymmetrischen, in radialsymmetrischen Moden angeregten Anregungslaserstrahl aufweist, der periodisch moduliert auf die Oberfläche einer anzuregenden Probe fokussiert ist und auf dieser ein Anregungsgebiet erzeugt, einem Testlaser, der einen dem Anregungslaserstrahl gleichwertigen, aber bezüglich der Wellenlänge verschiedenen Testlaserstrahl aufweist, wobei der Testlaserstrahl mittels eines Dichroitspiegels über ein beide Laserstrahlen auf die Probe fokussierendes Objektiv auf das Anregungsgebiet gerichtet ist, und einem Photodetektor, dem das reflektierte Testlaserlicht zugeführt ist und der mit einem Prozessor zur Umsetzung der Responsesignale in Parameter des Schichtsystems der Probe in Verbindung steht, dadurch gelöst, daß der Anregungslaserstrahl modenrein in einem radialsymmetrischen Einzelmode erzeugt ist, daß der Strahldurchmesser des Anregungslasers im Fokus nicht größer als der des Testlasers ist, und der Photodetektor ein ortsauflösender Detektor ist und sich im Auslesestrahlengang nach der Reflexion des Testlaserlichtes an der Probe in der bildseitigen Brennebene des Objektivs befindet, so daß auf ihn die Hankeltransformierte der Radialverteilung des moduliert reflektierten Testlaserlichtes trifft.
Dabei arbeitet der Anregungslaser vorteilhaft in reinem TEMₒₒ oder einem Radialmode höherer Ordnung.
Für den Detektor erweist es sich als zweckmäßig, eine in radialer Richtung zur optischen Achse angeordnete Diodenzeile oder einen Detektor aus isolierten ringförmigen, konzentrisch um die optische Achse angeordneten Empfängerflächen zu verwenden. Geeignet ist auch ein stationärer, großflächiger Einzeldetektor hinter einer im bildseitigen Fokus des Objektivs angeordneten variablen Lochblende, die mit konstanter Geschwindigkeit geöffnet bzw. geschlossen wird. Die letztere Variante bietet sich insbesondere für die Erfassung des rein thermischen Response-signales an, indem ein Objektiv guter IR-Transmission und ein schneller Hg-CdTe-Detektor verwendet werden.
Die Erfindung gründet sich auf die Erkenntnis, daß die integrale Messung der Thermowellenresponse in Phase und Amplitude nicht ausreicht, um gesicherte Aussagen über ein Schichtsystem zu erhalten, wenn Eigenschaften der Einzelschichten nicht weitgehend bekannt sind und konstant gehalten werden. Erfindungsgemäß wird deshalb das optische Responsesignal in geeigneter Weise erzeugt sowie mittels eines Detektors in der bildseitigen Brennebene des zur Fokussierung der Laserstrahlenbündel verwendeten Objektivs, wobei die Brennebene den Raum der Raumfrequenzen repräsentiert, ortsaufgelöst in Amplitude und Phase analysiert.
Die Radialverteilung der Responsesignale über der Raumfrequenz, die in dieser Brennebene vorliegt, enthält über deren Extrema bzw. Wendepunkte und Nullstellen leicht analysierbar die Information über alle Schichtparameter.
Mit der erfindungsgemäßen Anordnung ist es möglich, Mehrschichtsysteme berührungslos und zerstörungsfrei bezüglich ihrer geometrischen, thermischen und elektronischen und elastomechanischen Materialparameter auszumessen.

Die Erfindung soll nachstehend anhand zweier Ausführungsbeispiele näher erläutert werden.

### 1. Ausführungsbeispiel

Die Anwendung der Erfindung wird für die Messung des einfachen Schichtsysteme 50 nm a-Si auf c-Si-Substrat beschrieben.

Mittels eines harmonisch modulierten cw-Ar⁺-Lasers als Anregungslaser wird eine Nichtgleichgewichtsladungsträgerwelle lokal erzeugt und durch deren Relaxation eine Thermowelle erzeugt. Der Strahldurchmesser des Anregungslasers in der Probenoberfläche wird auf eine Fläche mit 1 µm Radius mit Hilfe eines geeigneten Objektivs fokussiert. Zur Erzielung einer der Schichtdicke und Strahldimension angepaßten Ortsauflösung wird als Modulationsfrequenz 1 MHz gewählt. Der Anregungslaser wird dabei erfindungsgemäß mit einem radialsymmetrischen Einzelmode betrieben; hier soll der TEMₒₒ eingestellt sein.
Zur Erfassung der Ladungsträger- und thermischen Response des Schichtsystems wird die Reflexion eines He-Ne-Testlaserstrahles gemessen und mittels Lock-in-Technik in Amplitude und Phase ausgewertet. Erfindungsgemäß geschieht das durch Beleuchtung des Anregungsgebietes mit einem Strahlradius, der mindestens so groß wie der Radius des Anregungslaserspots ist und in diesem Beispiel mehr als 2 µm beträgt. Das reflektierte Testlaserlicht wird so durch die Objektivlinse mit einer Brennweite von 2 cm einer Apertur von 0,5 transformiert, daß die Hankeltransformierte der Radialverteilung der vom Schichtsystem modulierten Reflexion in der bildseitigen Brennebene entsteht. Gemäß der Erfindung wird diese ebenfalls radialsymmetrische Intensitätsverteilung als Funktion der Raumfrequenz zweckmäßig durch eine in der bildseitigen Brennebene radial von der optischen Achse ausgehend angeordnete Diodenzeile detektiert. Die weitere Signalverarbeitung geschieht mittels Lock-in-Technik und Vielkanalanalysator.
Die Dimensionsvorschrift, die erfindungsgemäß der Anordnung Objektiv-Detektor zugrunde gelegt wird, geht von dem physikalischen Zusammenhang aus, daß die Information sowohl bezüglich Phase als auch Amplitude im Raumfrequenzintervall zwischen Null und 2/w liegt und dieses Intervall innerhalb eines Kreises mit dem Radius r* = 2 λₒf/w in der bildseitigen Brennebene lokalisiert ist, wobei λₒ die optische Wellenlänge, f die Brennweite und w die Taille des Anregungslaserstrahles auf der Probe bezeichnen. Bei vorgegebenem Objektiv bedeutet das einem Abstand zur Probe zwischen 0,5 und 1,5 cm, wodurch genügend Spielraum verbleibt, um in üblicher Weise die Fokussierung des Anregungslaserstrahles mit derselben Optik zu realisieren. Gleichzeitig ist gesichert, daß die Einzeldioden des Diodenfeldes bei einem radialen Abstand von 0,5 mm eine hinreichend große Ortsauflösung garantieren, um Ladungsträgerresponse-Signale in Phase und in Amplitude in Abhängigkeit von der Raumfrequenz aussagekräftig zu detektieren. Sollen im vorliegenden Beispiel für die a-Si-Schicht Ladungsträgerlebensdauer τ, Ladungsträgerdiffusivität D und Schichtdicke d bestimmt werden, so werden erfindungsgemäß mittels ortsauflösender Detektierung des Responsesignals an 3 verschiedenen Stellen λ ― Raum für 0 ≦ λ < ¹/w drei Signale erfaßt.
Aus den damit bekannten 3 analytischen Gleichungen
C₁ (D, τ, d, λ₁)
C₂ (D, τ, d, λ₂)
C₃ (D, τ, d, λ₃)
lassen sich durch bekannte numerische Standardverfahren die 3 Unbekannten D, τ und d direkt errechnen. Sind noch mehr unbekannte Schichtparameter enthalten, ist die Zahl der zu bestimmenden Meßwerte im λ ― Raum entsprechend zu erhöhen.
Zur Optimierung der Empfindlichkeit ist es am günstigsten, einen Detektor aus isolierten, ringförmig konzentrisch angeordneten Empfängerflächen zu benutzen, dessen Mitte auf der optischen Achse des Testlaserstrahles liegt.

### 2. Ausführungsbeispiel

Es ist die Wärmeleitfähigkeit in der p-Si-Schicht eines Schichtsystems p-Si/SiO₂/c-Si zu bestimmen.
Das thermische Responsesignal wird mittels photothermischer Radiometrie ermittelt. Zur Anregung wird ein Ar⁺-Laserstrahl auf einem Kreis mit einem Radius von 5 µm auf die Oberfläche des Schichtsystems fokussiert und mit 10 kHz moduliert.
Erfindungsgemäß wird nun die vom erwärmten Anregungsgebiet emittierte IR-Strahlung breitbandig verarbeitet, indem sie zunächst durch die Objektivlinse in deren bildseitige Brennebene transformiert wird. Dort befindet sich eine Irisblende, die sich mit konstanter Geschwindigkeit im Verlaufe von fünf Sekunden öffnet. Die die Blende passierende Strahlung wird mit einem Tiefpaß gefiltert und mittels eines schnellen Hg-CdTe-Detektors und nachgeordneter Lock-in-Technik nachgewiesen. Durch Differentiation des Signals über den Zeitverlauf des Blendenöffnungsprozesses erhält man die radiale Intensitätsverteilung über die Raumfrequenzen.

## Patentansprüche

1. Anordnung zur Thermowellenanalyse von Schichtsystemen mit einem Anregungslaser, wobei dieser einen zylindersymmetrischen, in radialsymmetrischen Moden angeregten Anregungslaserstrahl aufweist, der periodisch moduliert auf die Oberfläche einer anzuregenden Probe fokussiert ist und auf dieser ein Anregungsgebiet erzeugt, einem Testlaser, der einen dem Anregungslaserstrahl gleichwertigen, aber bezüglich der Wellenlänge verschiedenen Testlaserstrahl aufweist, wobei der Testlaserstrahl mittels eines Dichroitspiegels über ein beide Laserstrahlen auf die Probe fokussierendes Objektiv auf das Anregungsgebiet gerichtet ist, und einem Photodetektor, dem das reflektierte Testlaserlicht zugeführt ist und der mit einem Prozessor zur Umsetzung der Responsesignale in Parameter des Schichtsystems der Probe in Verbindung steht, dadurch gekennzeichnet, daß
- der Anregungslaserstrahl modenrein in einem radialsymmetrischen Einzelmode erzeugt ist,
- der Strahldurchmesser des Anregungslasers im Fokus nicht größer als der des Testlasers ist,
- der Photodetektor ein ortsauflösender Detektor ist und sich im Auslesestrahlengang nach der Reflexion des Testlaserlichtes an der Probe in der bildseitigen Brennebene des Objektivs befindet, so daß auf ihn die Hankeltransformierte der Radialverteilung des moduliert reflektierten Testlaserlichtes trifft.

2. Anordnung gemäß Anspruch 1, dadurch gekennzeichnet,
daß der Anregungslaser den TEMₒₒ aufweist.

3. Anordnung gemäß Anspruch 1, dadurch gekennzeichnet,
daß der Anregungslaser einen Radialmode höherer Ordnung aufweist.

4. Anordnung gemäß Anspruch 1, dadurch gekennzeichnet,
daß als Detektor eine in radialer Richtung zur optischen Achse angeordnete Diodenzeile angeordnet ist.

5. Anordnung gemäß Anspruch 1, dadurch gekennzeichnet,
daß der Detektor aus isolierten ringförmigen, konzentrisch um die optische Achse angeordneten Empfängerflächen besteht.

6. Anordnung gemäß Anspruch 1, dadurch gekennzeichnet, daß der Detektor ein stationärer Einzeldetektor hinter einer im bildseitigen Fokus des Objektivs angeordneten variierbaren Lochblende ist, wobei die Öffnungsgeschwindigkeit der Blende konstant ist.

7. Anordnung gemäß Anspruch 6, gekennzeichnet dadurch, daß zur Aufnahme des rein thermischen Responsesignals ein Objektiv guter IR-Transmission und ein schneller Hg-CdTe-Detektor eingesetzt sind.

## Claims

1. An arrangement for thermal-wave analysis of layer systems, comprising an excitation laser which delivers a symmetrical cylindrical beam, excited in radially symmetrical modes, periodically focused on the surface of a sample for excitation and generating an excitation area thereon, the arrangement also comprising a test laser which delivers a beam equivalent to the excitation laser beam but differing in wavelength, the test laser beam being directed by a dichroic mirror on to the excitation area via an objective which focuses both laser beams on the sample, the arrangement also comprising a photodetector to which the reflected test laser light is supplied and which is connected to a processor for converting the response signals into parameters of the layer system making up the sample, characterised in that
- the excitation laser beam is generated in a single pure radially symmetrical mode,
- the diameter of the excitation laser beam at the focus is not greater than the diameter of the test-laser beam, and
- the photodetector is a position-resolving detector and is in the path of the selecting beam after the test laser light has been reflected on the sample in the focal plane of the objective on the image side, so that the Hankel transform of the radial distribution of the modulated and reflected test laser light falls on the photodetector.

2. An arrangement according to claim 1, characterised in that the excitation laser has the TEMₒₒ.

3. An arrangement according to claim 1, characterised in that the excitation laser has a higher-order radial mode.

4. An arrangement according to claim 1, characterised in that the detector is a line of diodes disposed in the radial direction relative to the optical axis.

5. An arrangement according to claim 1, characterised in that the detector is made up of insulated annular receiver surfaces disposed concentrically around the optical axis.

6. An arrangement according to claim 1, characterised in that the detector is a stationary individual detector behind a variable pinhole diaphragm disposed at the focus of the objective on the image side, the speed of opening of the diaphragm being constant.

7. An arrangement according to claim 6, characterised in that an objective having good IR transmission and a high-speed Hg-CdTe detector are used to receive the response signal, which is purely thermal.

## Revendications

1. Dispositif pour l'analyse d'ondes thermiques de systèmes en couches comportant un laser d'excitation, dans lequel celui-ci présente un rayon laser d'excitation à symétrie cylindrique, excité dans des modes à symétrie radiale, qui périodiquement modulé est focalisé sur la surface d'un échantillon à exciter et produit sur celui-ci un domaine d'excitation, comportant un laser de test, qui présente un rayon de laser de test équivalent au rayon de laser d'excitation, mais différent en ce qui concerne la longueur d'onde, le rayon de laser de test étant orienté au moyen d'un miroir dichroïque, par un objectif focalisant les deux rayons laser sur l'échantillon, sur le domaine d'excitation, et comportant un photodétecteur auquel est envoyé la lumière du laser test réfléchie et qui est en liaison avec un processeur pour la conversion des signaux de réponse en paramètres du système en couches de l'échantillon, caractérisé en ce que
- le rayon du laser d'excitation est produit de manière purement modale dans un mode individuel à symetrie radiale,
- le diamètre du rayon du laser d'excitation au foyer n'est pas supérieur à celui du laser test,
- le photodétecteur est un détecteur à résolution locale et se trouve dans le parcours des rayons d'extraction, après la réflexion de la lumière du laser test sur l'échantillon, dans le plan focal côté image de l'object, de sorte que sur celui-ci parvient la transformée de Hankel de la distribution radiale de la lumière du laser test réfléchie de manière modulée.

2. Dispositif selon la revendication 1, caractérisé en ce que le laser d'excitation présente le TEMₒₒ.

3. Dispositif selon la revendication 1, caractérisé en ce que le laser d'excitation présente un mode radial d'ordre supérieur.

4. Dispositif selon la revendication 1, caractérisé en ce qu'il est prévu comme détecteur une ligne de diodes placée radialement par rapport à l'axe optique.

5. Dispositif selon la revendication 1, caractérisé en ce que le détecteur est constitué de surfaces de récepteur annulaires isolées, disposées concentriquement autour de l'axe optique.

6. Dispositif selon la revendication 1, caractérisé en ce que le détecteur est un détecteur individuel fixe derrière un diaphragme perforé variable, placé au foyer côté image de l'objectif, la vitesse d'ouverture du diaphragme étant constante.

7. Dispositif selon la revendication 6, caractérisé en ce que pour recevoir le signal de réponse purement thermique, on utilise un objectif de bonne transmission IR et un détecteur Hg-CdTe rapide.
